# EUROPEAN PATENT APPLICATION

(11) **EP 4 764 054 A1**
(43) Date of publication of application: **24.06.2026**
(21) Application number: 25162652.9
(22) Date of filing: 10.03.2025
(51) Int. Cl.: D06F 81/04, F16B 7/14, F16M 11/28

(54) **TELESCOPIC POLE ASSEMBLY WITH LOCKING UNIT, GARMENT CARE DEVICE IMPLEMENTING THE SAME**

(30) Priority: 20.12.2024 WO PCT/CN2024/140899
(71) Applicant: Versuni Holding B.V., 1082 MD Amsterdam (NL)
(72) Inventor: SUN, Lianping, 1082 MD Amsterdam (NL); SHEN, Yingdan, 1082 MD Amsterdam (NL)
(74) Representative: Vollering, Stefanus Franciscus Maria

(57) **Abstract**

The invention relates to a telescopic pole assembly (100), comprising a lower pole (101) and an upper pole (102), the upper pole being adapted to slide inside the lower pole to form a telescopic coupling in-between. The telescopic pole assembly 100 also comprises a locking unit (103) attached to an upper part (101b) of the lower pole. The locking unit comprises an upper part (103b) forming a sleeve (104) adapted to receive the upper pole and to create a sliding coupling between the sleeve and the upper pole. The locking unit comprises a lateral opening (105) being arranged in the sleeve and opening onto the upper pole. The telescopic pole assembly 100 also comprises a pusher element (106) mounted slidable in the lateral opening, to come into contact with the upper pole when the upper pole is inserted in the sleeve. The telescopic pole assembly 100 also comprises a knob (107) mounted rotating on the locking unit around an axis of rotation (A1) being substantially perpendicular to a longitudinal axis (A2) of the lower and upper poles. The knob comprising a rear face (107R) on which is arranged a protruding slope (107P), the protruding slope being adapted to exert a force (F) onto the pusher element when the knob is rotated around said axis of rotation.

## Description

### FIELD OF THE INVENTION

The invention relates to a telescopic pole assembly with locking unit, and a garment care device implementing the same.

The invention can be used in the field of garment care, but more generally in any other fields where a telescopic pole assembly is needed.

### BACKGROUND OF THE INVENTION

Some devices comprise a telescopic pole assembly to vary the height or length of a part implemented in those devices. For example, garment care devices often come with a telescopic pole assembly to set the heigh of the garment care device. In particular, stand steamers (with or without attached ironing board) usually comprise a telescopic pole assembly which height can be changed by user, either in order to accommodate with the height of the user, or to accommodate with the type of garment treatment user plans to do.

Known pole assemblies usually comprise an upper vertical pole and a lower vertical pole forming a telescopic coupling. The upper pole slides into the lower pole, so that the overall length formed by those two poles can be set by user. When user has defined the proper overall length, a manual locking mechanism allows user to lock the position of the upper pole relative to the lower pole, so that the overall length is set and fixed.

This locking mechanism usually comprises a user-actuated lever which is attached and hinged on the lower pole. The lever cooperates with a movable pressing block being in contact with the upper pole. When the lever is actuated, a force is exerted by the lever on the pressing block, resulting in preventing movement between the lower pole and the upper pole.

Despite this known locking mechanism fulfils the mechanical needs of preventing movement between the lower pole and the upper pole, this solution is not user friendly given the fact that the lever must be actuated along a direction not convenient for the user.

Moreover, this known locking mechanism may become loose overtime, resulting in the fact that force exerted on the upper pole might not be sufficient to ensure a firm locking between the lower pole and the lower pole.

### OBJECT AND SUMMARY OF THE INVENTION

It is an object of the invention to propose an improved telescopic pole assembly for a garment care device that avoids or mitigates above-mentioned problems.

The invention is defined by the independent claims. The dependent claims define advantageous embodiments.

To this end, the telescopic pole assembly according to the invention comprises:
- a lower pole and an upper pole, the upper pole being adapted to slide inside the lower pole to form a telescopic coupling in-between,
- a locking unit attached to an upper part of the lower pole, the locking unit comprising an upper part forming a sleeve adapted to receive the upper pole and to create a sliding coupling between the sleeve and the upper pole, the locking unit comprising a lateral opening being arranged in the sleeve and opening onto the upper pole,
- a pusher element mounted slidable in the lateral opening, to come into contact with the upper pole when the upper pole is inserted in the sleeve,
- a knob mounted rotating on the locking unit around an axis of rotation being substantially perpendicular to a longitudinal axis of the lower and upper poles, the knob comprising a rear face on which is arranged a protruding slope, the protruding slope being adapted to exert a force onto the pusher element when the knob is rotated around said axis of rotation.

This telescopic pole assembly is advantageous because the knob, used as manual actuator by a user, is rotated along a rotation axis which is naturally facing user. As a result, actuation of the knob by user is friendly, convenient, and helps to firmly lock the upper pole relative to the lower pole.

Preferably, the locking unit further comprises:
- a pin protruding from the locking unit and extending along said axis of rotation, the pin being adapted to receive the knob and act as rotation shaft for the knob,
- a gasket screwed at an extremity of the pin to prevent the knob from disengaging from the pin, and allowing the protruding slope to exert said force on the pusher element.

The pin allows a good and tight guiding of the knob during rotation, while the gasket allows the knob to always remain at the same distance from the lower / upper poles. In other words, when the knob is rotated, there is no mechanical gaps, and the rotation is not loose.

Preferably, the knob is substantially cylindrical and its rear face is circular, the protruding slope being arranged near an outer periphery of the circular rear face.

The knob has an overall cylindrical shape, and its rear face forms a circular surface. This is advantageous to arrange the protruding slope on this rear face, given the rotation movement of the knob. Arranging the protruding slope at a periphery of this rear circular face helps to exert a higher force against the pusher element, without the need for user to generate a too important tangential force on the knob. A more firm locking of the upper pole relative to the lower pole can thus be achieved, without too much efforts from the user.

Preferably, the locking unit further comprises a guide element attached to the locking unit, the knob comprising a tongue element protruding from its cylindrical outer surface, the tongue element being adapted to cooperate and engage with the guide element when the knob is rotated, such that the guide element retains the tongue element from moving away from the locking unit.

In view that the force exerted by the protruding slope on the pusher element is offset compared to the rotation axis of the knob, this creates a momentum force on the knob. To counter this momentum force, the guide element creates a counter force on the tongue element, which in turns prevents any deformation of the knob when an increasing force is exerted by the pusher element on the upper pole. Moreover, when the knob is rotated for locking the upper pole relative to the lower pole, the protruding slope can push against the pusher element with a higher force, without compromising the knob or the locking unit, which results in a more firm locking of the upper pole relative to the lower pole.

Preferably, the locking unit further comprises a front cover, the front cover comprising a circular opening for receiving the knob.

The circular opening arranged in the front cover of the locking unit helps to guide the knob in the locking unit. In other words, there is no gap between the knob and the locking unit. This improves user experience, contrary to having very loose assembly between the knob and the locking unit.

Preferably, the knob comprises a lever oriented substantially perpendicular to the axis of rotation of the knob.

The lever helps to increase the tangential force exerted by user on the knob, which in turns helps to increase the force exerted by the protruding slope on the pusher element. As a result, this allows a more firm locking between the lower pole and the upper pole.

Preferably, the locking unit further comprises a first stopper and a second stopper, the knob comprising a protruding element arranged on its rear surface adapted to move between the first stopper and the second stopper.

This allows limiting the angular movement of the knob, and gives to user a tactile feedback about when the locking position is reached, or about when the release position is reached.

Preferably, a protective cap is arranged on a front periphery of the knob.

This protective cap helps to hide the gasket arranged to retain the knob on the pin, and prevents dust from entering the knob.

Preferably, the locking unit further comprises a rear cover, the rear cover comprising a coupling mechanism for attaching/detaching a supporting arm of a docking unit used to dock an iron head.

Since the locking unit surrounds the upper pole and the lower pole, this is advantageous to use the rear cover of the locking unit to attach an accessory, such as a supporting arm of a docking unit used to dock an iron head.

Preferably, the locking unit further comprises a groove to receive and attach an upper part of the lower pole.

Using a groove is advantageous, as the attachment can be made tight without using glue. User can also assemble / disassemble the lower pole and the locking unit very conveniently.

The invention also relates to a garment care device comprising a base, and a telescopic pole assembly as described above, the telescopic pole assembly being mounted on the base.

The telescopic pole assembly helps to set the length of the upper pole relative to the lower pole, independently whether there is board or not arranged on the pole assembly.

Detailed explanations and other aspects of the invention will be given below.

### BRIEF DESCRIPTION OF THE DRAWINGS

Particular aspects of the invention will now be explained with reference to the embodiments described hereinafter and considered in connection with the accompanying drawings, in which identical parts or sub-steps are designated in the same manner :
Fig.1 depicts a three-dimensional external view of a telescopic pole assembly according to the invention,
Fig.2 depicts a three-dimensional internal view of a telescopic pole assembly according to the invention without user knob,
Fig.3 depicts a three-dimensional internal view of a telescopic pole assembly according to the invention with a user knob,
Fig.4 depicts a cross-sectional view of a telescopic pole assembly according to the invention with a user knob,
Fig.5 depicts a three-dimensional exploded view of a telescopic pole assembly according to the invention,
Figs.6A-6B-6C-6D depicts various views of a user knob used in a telescopic pole assembly according to the invention,
Figs.7A-7B-7C depict various views of a user knob used in a telescopic pole assembly according to the invention,
Fig.8 depicts a guide element used in a telescopic pole assembly according to the invention,
Fig.9 depicts a garment care device implementing a telescopic pole assembly according to the invention,
Figs.10A-10B-10C depict various views of the garment care device of Fig.9.

### DETAILED DESCRIPTION OF THE INVENTION

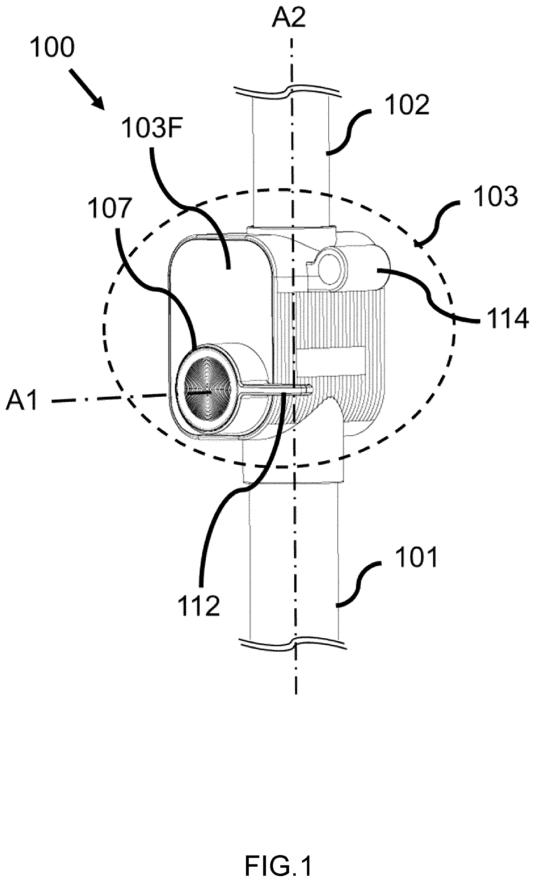

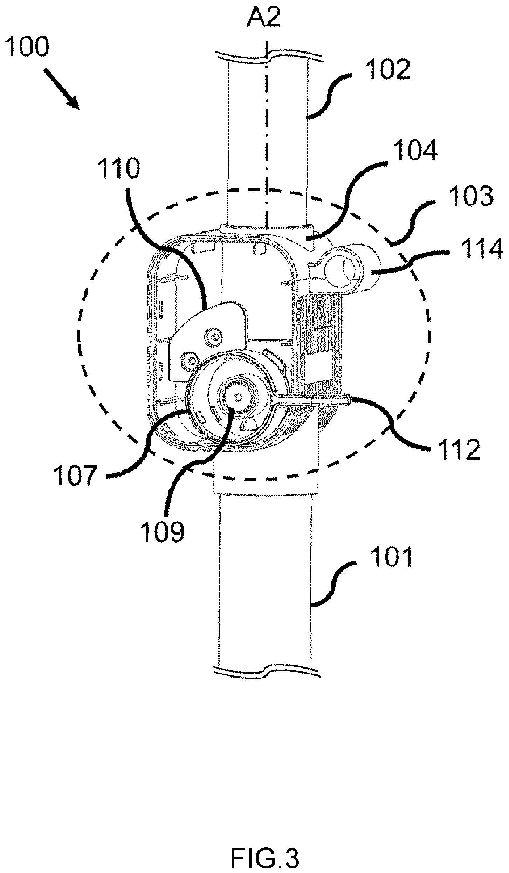

Figs.1-2-3-4-5 depict various views of a telescopic pole assembly 100 according to the invention.

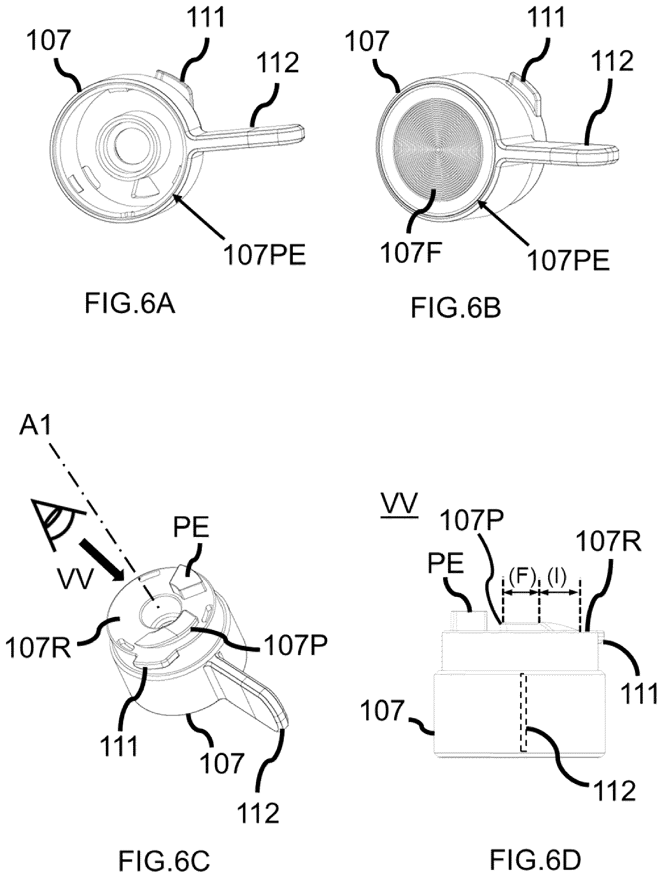

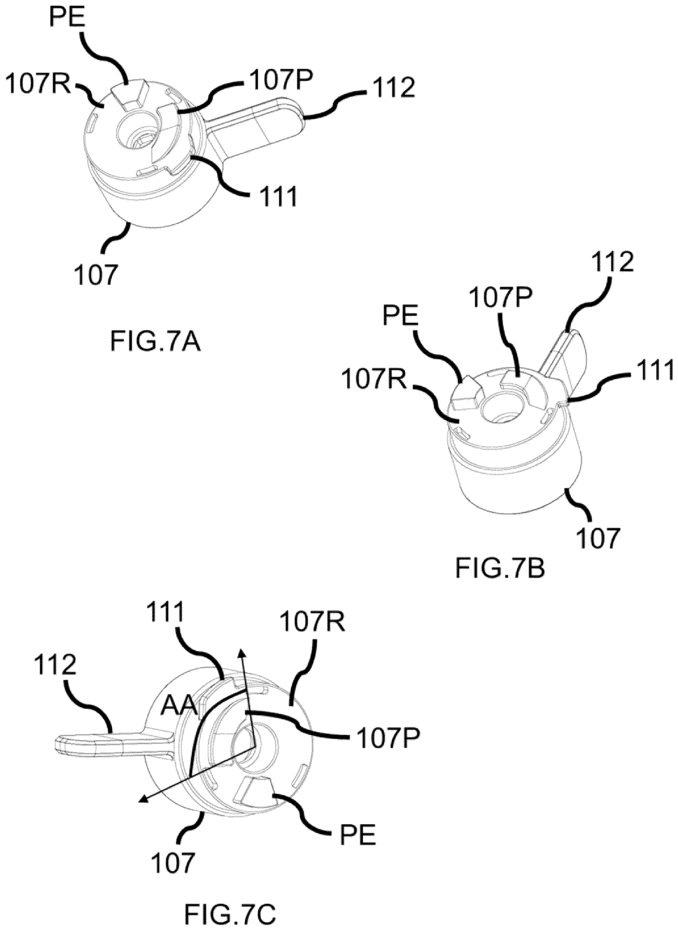

Figs.6A-6B-6C-6D and Figs.7A-7B-7C depict various views of a knob 107 used in a telescopic pole assembly 100 according to the invention.

The telescopic pole assembly 100 according to the invention comprises a lower pole 101 and an upper pole 102. The upper pole 102 is adapted to slide inside the lower pole 101 to form a telescopic coupling in-between.

The telescopic pole assembly 100 also comprises a locking unit 103 attached to an upper part 101b of the lower pole 101.

The locking unit 103 comprises an upper part 103b forming a sleeve 104 adapted to receive the upper pole 102 and to create a sliding coupling between the sleeve 104 and the upper pole 102.

The locking unit 103 comprises a lateral opening 105 being arranged in the sleeve 104 and opening onto the upper pole 102.

A pusher element 106 is mounted slidable in the lateral opening 105, to come into contact with the upper pole 102 when the upper pole 102 is inserted into the sleeve 104.

A knob 107 is mounted rotating on the locking unit 103 around an axis of rotation A1 being substantially perpendicular to a longitudinal axis A2 of the lower and upper poles.

The knob 107 comprises a rear face 107R on which is arranged a protruding slope 107P. The protruding slope 107P is adapted to exert a force (F) onto the pusher element 106 when the knob is rotated around the axis of rotation A1.

Varying the relative position between the upper pole 102 and the lower pole 101 allows changing the overall length of the upper pole 102 / lower pole 101. For a given overall length set for the upper pole 102 / lower pole 101, the force F exerted by the protruding slope 107P onto the pusher element 106 helps to tighten the coupling in-between, resulting in keeping this overall length in place.

By "substantially perpendicular", it is referred to an angle of 90 degrees +/- 20 degrees.

When the knob 107 is rotated by a user in a first direction (for example counterclockwise), the protruding slope 107P will exert an increasing force F against the pusher element 106, eventually resulting in immobilizing the upper pole 102 relative to the lower pole 101.

When the knob 107 is rotated by user in a second direction (for example clockwise) being opposite to the first direction, the protruding slope 107P will exert a decreasing force F against the pusher element 106, eventually resulting in the possibility to move the upper pole 102 relative to the lower pole 101.

Since the pusher element 106 forms a slope of increasing height, the force F exerted on the pusher element 106 is of varying intensity, depending on the angular movement of the knob 107.

The pusher element 106 is mounted loose into the lateral opening 105.

The pusher element 106 is for example cubic-shaped or parallelepipedal-shaped, and the lateral opening 105 has a complementary shape.

If cross-section of the upper pole 102 is circular, the face of the pusher element 106 facing the upper pole 102 is preferably partly cylindrical in order to increase the contact surface area with the upper pole 102, resulting in a force F of higher intensity exerted on the upper pole 102.

If cross-section of the upper pole 102 is square, the face of the pusher element 106 facing the upper pole 102 is preferably flat in order to increase the contact surface area with the upper pole 102, resulting in a force F of higher intensity exerted on the upper pole 102.

Preferably, the locking unit 103 comprises a pin 108 protruding from the locking unit 103 and extending along the axis of rotation A1. The pin 108 is adapted to receive the knob 107 and act as rotation shaft for the knob 107. The locking unit 103 also comprises a gasket 109 screwed by screw 109S at an extremity of the pin 108 to prevent the knob from disengaging from the pin 108, and allowing the protruding slope 107P to continue exerting the force F on the pusher element 106. Using a gasket 109 screwed by screw 109S is more robust than having the knob 107 being mounted on the pin 108 via a snap fit mechanism which could be easily detached.

Preferably, the knob 107 is substantially cylindrical and its rear face 107R is circular. The protruding slope 107P is arranged near an outer periphery of the rear face 107R.

Since the knob 107 is rotatable, in order for the protruding slope 107P to be continuously in front the pusher element 106, the protruding slope 107P forms an arc of circle.

For example, as depicted in Fig.7C, the arc of circle has an angle AA of 90 degrees.

Fig.6D depicts a vertical side view VV of Fig.6C.

Preferably, as illustrated, the protruding slope 107P has an inclined portion (I), and an elevated flat portion (F) at its end to ensure that a stable and continuous force F is exerted on the pusher element 106.

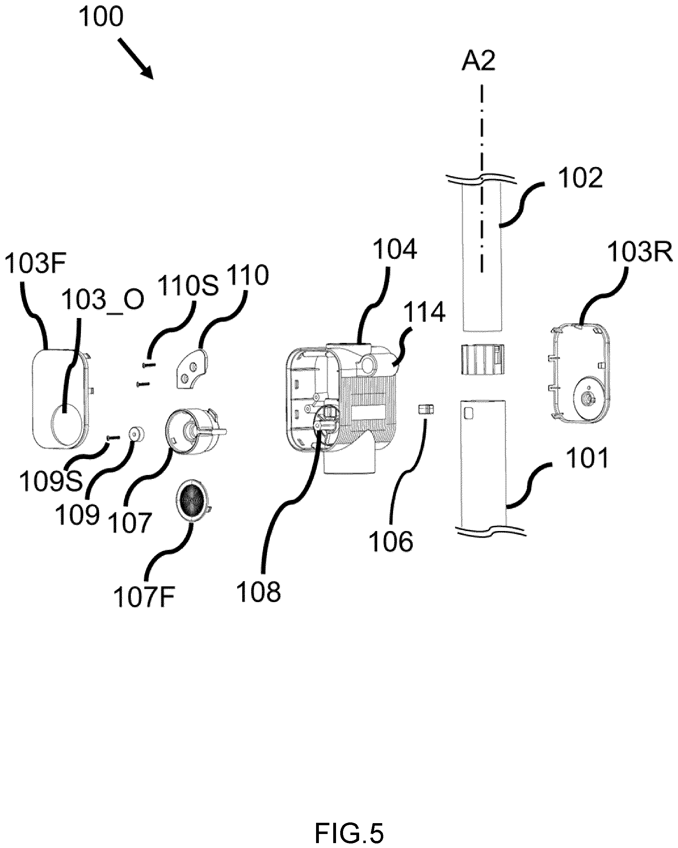

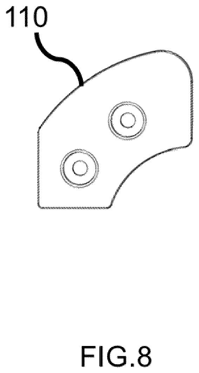

Preferably, the locking unit 103 further comprises a guide element 110 attached to the locking unit 103. A detailed front view of the guide element 110 is depicted in Fig.8. The guide element 110 is a substantially flat element screwed to the locking unit 103 by two screws 110S shown in Fig.5. The guide element 110 could also be referred to as "guide cover" or "baffle". The knob 107 comprises a tongue element 111 protruding from the cylindrical outer surface of the knob 107. The tongue element 111 is adapted to cooperate and engage with the guide element 110 when the knob 107 is rotated, such that the guide element 111 retains the tongue element 111 from moving away from the locking unit 103.

As depicted, the tongue element 111 preferably protrudes at proximity of the rear face 107R.

Preferably, as depicted in Fig.5, the locking unit 103 further comprises a front cover 103F. The front cover 103F comprises a circular opening 103_O for receiving the knob 107.

Preferably, as depicted in the various figures, the knob 107 comprises a lever 112 oriented substantially perpendicular to the axis of rotation A1 of the knob. The lever 112 helps to rotate the knob 107 more easily, by exerting a higher force F on the pusher element 106.

The lever 112 extends radially compared to the knob 107. For example, the length of the lever 112 is in the range 3-10 cm. In the present illustrated embodiments, the lever is substantially flat, but could also be more rounded (not shown).

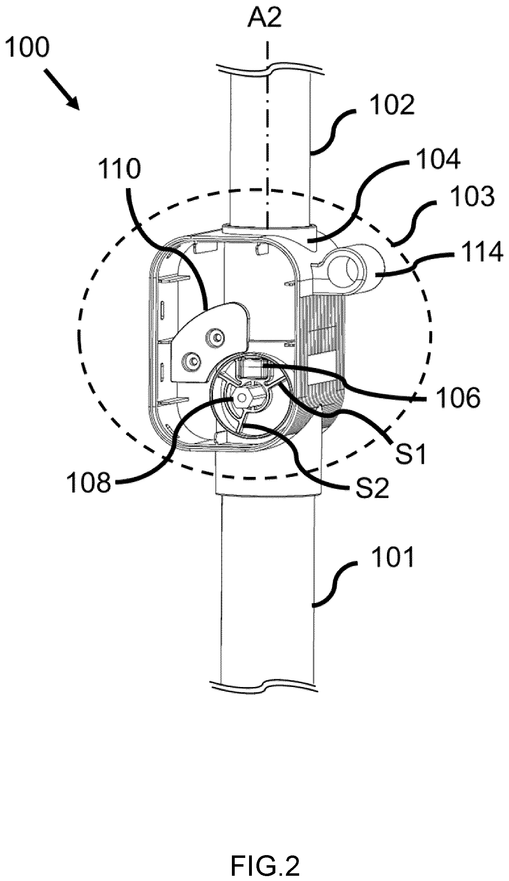

Preferably, as depicted in Fig.2, the locking unit 103 further comprises a first stopper S1 and a second stopper S2. The first stopper S1 and the second stopper S2 for example correspond to protruding ribs arranged in the locking unit 103.

Preferably, as depicted in Figs.6C-6D and Figs.7A-7B-7C, the knob 107 comprises a protruding element PE arranged on its rear surface 107R. The protruding element PE is adapted to move between the first stopper S1 and the second stopper S2. The first stopper S1 and the second stopper S2 restrict the movement of the protruding element PE in-between.

For example, the stoppers S1 and S2 are arranged such that the protruding element PE is able to rotate within an angular amplitude corresponding to the angle AA of the protruding slope 107P, for example 90 degrees +/- 20 degrees.

Preferably, as depicted in Fig.6B, a protective cap 107F is arranged on a front periphery 107PE of the knob 107. In the present case, the protective cap 107F is circular, and is fixed to the knob 107 via a snap fit mechanism.

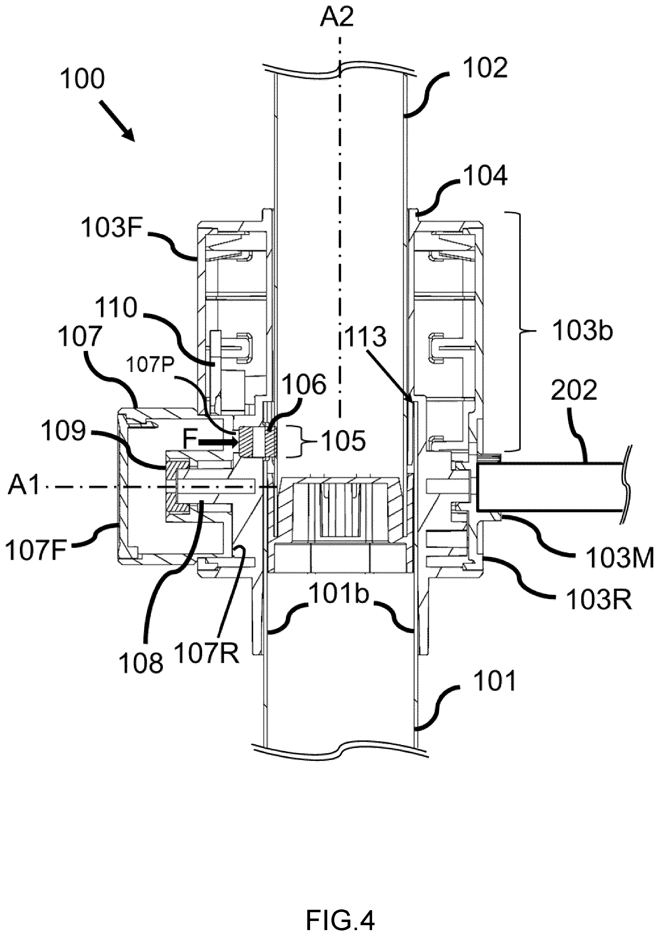

Preferably, as depicted in Figs.4 and 5, the locking unit 103 further comprises a rear cover 103R. The rear cover comprises a coupling mechanism 103M for attaching/detaching a supporting arm 202 of a docking unit 203 used to dock an iron head 204.

This feature takes advantage of the fact that the locking unit 103 surrounds the lower pole 101 and the upper pole 102. Since the knob 107 is already arranged on the front cover 103F, the rear cover 103F can thus be used for other purposes, such as to attach this supporting arm 202, or other accessories.

The supporting arm 202 for example takes the form of a cylindrical rod, and the coupling mechanism 103M takes the form of a cylindrical recess. The cylindrical rod is mounted tight into the cylindrical recess. The supporting arm 202 is detachably mounted in the coupling mechanism 103M.

The docking unit 203 is used to rest the iron head 204 when the iron head 204 is not in use by user.

It is noted that iron head could also be referred to as "steamer head".

Preferably, as depicted in Fig.4, the locking unit 103 further comprises a groove 113 to receive and attach an upper part of the lower pole 101. The lower pole 101 is mounted tight into the groove 113. For example, if the lower pole 101 has a circular cross-section, the groove 113 is circular. Depth of the groove 113 is preferably in the range 1-3 cm.

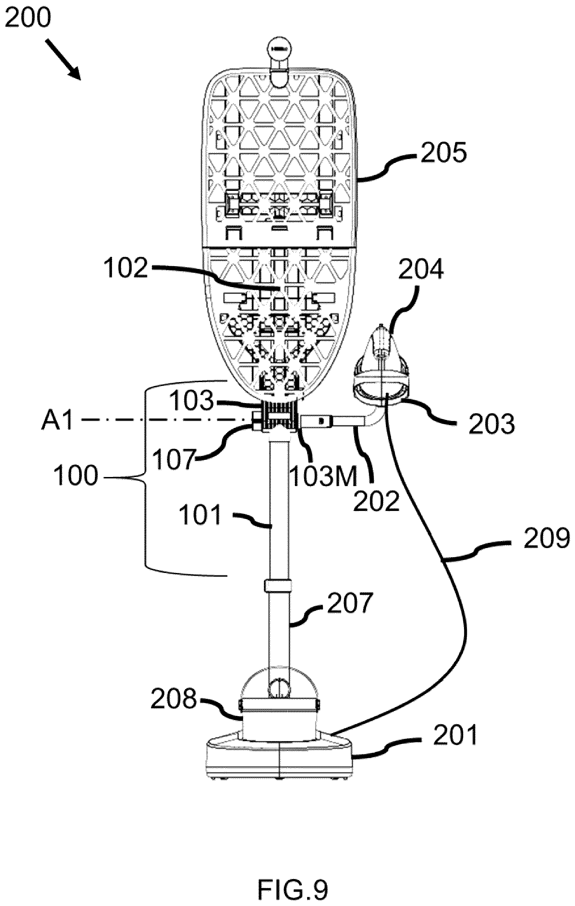

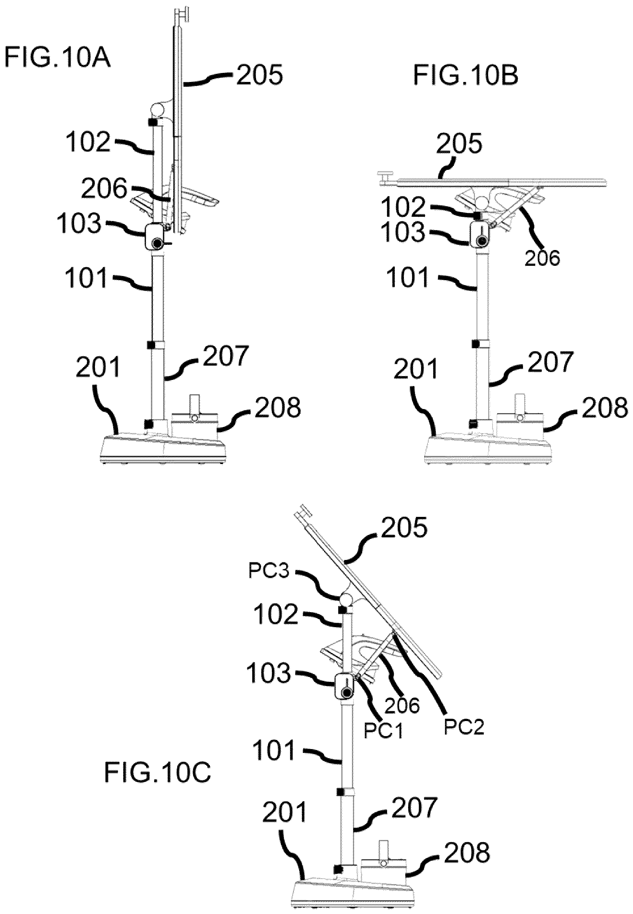

Fig.9 depicts a garment care device 200 implementing a telescopic pole assembly 100 according to the invention, while Figs.10A-10B-10C depict various views of the garment care device of Fig.9.

The garment care device 200 comprises a base 201, and a telescopic pole assembly 100 as described previously according to the invention. The telescopic pole assembly 100 is mounted on the base 201 (directly mounted, or mounted via an optional telescopic pole 207 extending between the base 201 and the lower pole 101).

A supporting arm 202 is detachably mounted on the locking unit 103 via the coupling mechanism 103M. A docking unit 203 is fixed to the supporting arm 202. The docking unit is intended to dock an iron head 204. The iron head 204 comprises a steam generator (not shown) to generate steam (either from a source of water, or from a source of steam to be reheated) towards a garment to be treated.

The base 201 comprises a water tank 208 to carry water to the iron head 204 via a hose cord 209. Alternatively, the element 208 is a boiler 208 to generate steam which is carried from the base 101 to the iron head 204 via the hose cord 209.

Preferably, the garment care device 200 comprises an ironing board 205 mounted on the telescopic pole assembly 100. In this situation, the telescopic pole assembly 100 allows to set the overall height of the ironing board 205 compared to ground floor.

Preferably, as depicted in Figs.10A-10B-10C, the ironing board 205 is tiltable relative to the telescopic pole assembly 100.

To this end, the garment care device 200 comprises:
- a linking arm 206 having a first extremity and a second extremity,
- a first pivot coupling PC1 arranged between the first extremity of the linking arm 206 and the locking unit 103,
- a second pivot coupling PC2 arranged between the second extremity of the linking arm 206 and the ironing board 205,
- a third pivot coupling PC3 arranged between a top part of the upper pole 102 and the ironing board 205.

The first pivot coupling PC1 comprises a coupling element 114 arranged on the locking unit 103.

Preferably, the ironing board 205 is tiltable relative to the telescopic pole assembly 100 between a horizontal orientation and a vertical orientation.

By varying how long the upper pole 102 is inserted into the lower pole 101 allows to set the tilt angle of the ironing board 205.

If the ironing board 205 is oriented vertically, as depicted in Fig.10A, the upper pole 102 comes out from the lower pole 101 with a maximum length extension.

If the ironing board 205 is oriented horizontally, as depicted in Fig.10B, the upper pole 102 comes out from the lower pole 101 with a minimum length extension.

If the ironing board 205 is oriented at any angle between vertical and horizontal, as depicted in Fig.10C, the upper pole 102 comes out from the lower pole 101 with an intermediate length extension.

For each of those tilt orientations of the ironing board 205, the locking unit 103 is used to lock the corresponding relative position between the lower pole 101 and the upper pole 102. This prevents the ironing board 205 to change its tilt orientation during treatment of garments by the iron head.

Preferably, as illustrated in Fig.9, the ironing board 205 forms a planar surface, and the locking unit 103 is oriented around the lower pole 101 such that the axis of rotation A1 of the knob 107 is substantially parallel to said planar surface.

This has the advantage that when the ironing board 205 is oriented horizontally for treating a garment horizontally, user can naturally stand in front the knob 107. In this position, it is convenient for user to operate the knob 107 if user wants to change the tilt orientation of the ironing board 205.

The above embodiments as described are only illustrative, and not intended to limit the technique approaches of the present invention. Although the present invention is described in details referring to the preferable embodiments, those skilled in the art will understand that the technique approaches of the present invention can be modified or equally displaced without departing from the protective scope of the claims of the present invention. In particular, although the invention has been described based on a garment care device, it can be applied to any other devices implementing a telescopic pole assembly. In the claims, the word "comprising" does not exclude other elements or steps, and the indefinite article "a" or "an" does not exclude a plurality. Any reference signs in the claims should not be construed as limiting the scope.

## Claims

1. A telescopic pole assembly (100), comprising:
- a lower pole (101) and an upper pole (102), the upper pole being adapted to slide inside the lower pole to form a telescopic coupling in-between,
- a locking unit (103) attached to an upper part (101b) of the lower pole, the locking unit comprising an upper part (103b) forming a sleeve (104) adapted to receive the upper pole and to create a sliding coupling between the sleeve and the upper pole, the locking unit comprising a lateral opening (105) being arranged in the sleeve and opening onto the upper pole,
- a pusher element (106) mounted slidable in the lateral opening, to come into contact with the upper pole when the upper pole is inserted in the sleeve,
- a knob (107) mounted rotating on the locking unit around an axis of rotation A1 being substantially perpendicular to a longitudinal axis (A2) of the lower and upper poles, the knob comprising a rear face (107R) on which is arranged a protruding slope (107P), the protruding slope being adapted to exert a force (F) onto the pusher element when the knob is rotated around said axis of rotation.

2. Telescopic pole assembly as claimed in any one of the preceding claims, wherein the locking unit (103) further comprises:
- a pin (108) protruding from the locking unit (103) and extending along said axis of rotation (A1), the pin being adapted to receive the knob (107) and act as rotation shaft for the knob,
- a gasket (109) screwed at an extremity of the pin to prevent the knob from disengaging from the pin, and allowing the protruding slope (107P) to exert said force on the pusher element (106).

3. Telescopic pole assembly as claimed in any one of the preceding claims, wherein the knob (107) is substantially cylindrical and its rear face (107R) is circular, the protruding slope (107P) being arranged near an outer periphery of the circular rear face.

4. Telescopic pole assembly as claimed in claim 3, wherein the locking unit (103) further comprises a guide element (110) attached to the locking unit (103), the knob (107) comprising a tongue element (111) protruding from its cylindrical outer surface, the tongue element being adapted to cooperate and engage with the guide element when the knob is rotated, such that the guide element retains the tongue element from moving away from the locking unit.

5. Telescopic pole assembly as claimed in any one of the preceding claims, wherein the locking unit (103) further comprises a front cover (103F), the front cover comprising a circular opening (103_O) for receiving the knob (107).

6. Telescopic pole assembly as claimed in any one of the preceding claims, wherein the knob (107) comprises a lever (112) oriented substantially perpendicular to the axis of rotation (A1) of the knob.

7. Telescopic pole assembly as claimed in any one of the preceding claims, wherein the locking unit (103) further comprises a first stopper (S1) and a second stopper (S2), the knob (107) comprising a protruding element (PE) arranged on its rear surface (107R) adapted to move between the first stopper and the second stopper.

8. Telescopic pole assembly as claimed in any one of the preceding claims, wherein a protective cap (107F) is arranged on a front periphery (107PE) of the knob (107).

9. Telescopic pole assembly as claimed in any one of the preceding claims, wherein the locking unit (103) further comprises a rear cover (103R), the rear cover comprising a coupling mechanism (103M) for attaching/detaching a supporting arm (202) of a docking unit (203) used to dock an iron head (204).

10. Telescopic pole assembly as claimed in any one of the preceding claims, wherein the locking unit (103) further comprises a groove (113) to receive and attach an upper part of the lower pole (101).

11. A garment care device (200), comprising:
- a base (201),
- a telescopic pole assembly (100) as claimed in any one of the preceding claims, the telescopic pole assembly being mounted on the base.

12. A garment care device as claimed in claim 11, further comprising an ironing board (205) mounted on the telescopic pole assembly (100).

13. A garment care device as claimed in claim 12, wherein the ironing board (205) is tiltable relative to the telescopic pole assembly (100).

14. A garment care device as claimed in claim 13, comprising:
- a linking arm (206) having a first extremity and a second extremity,
- a first pivot coupling (PC1) arranged between the first extremity of the linking arm and the locking unit (103),
- a second pivot coupling (PC2) arranged between the second extremity of the linking arm and the ironing board (205),
- a third pivot coupling (PC3) arranged between a top part of the upper pole (102) and the ironing board.

15. A garment care device as claimed in any one of the claims 12, 13 or 14, wherein the ironing board (205) forms a planar surface, and the locking unit (103) is oriented around the lower pole (101) such that the axis of rotation (A1) of the knob (107) is substantially parallel to said planar surface.
